# EUROPÄISCHE PATENTSCHRIFT

(11) **EP 3 552 874 B1**
(45) Veröffentlichungstag und Bekanntmachung des Hinweises auf die Patenterteilung: **09.11.2022**
(21) Anmeldenummer: 19165069.6
(22) Anmeldetag: 26.03.2019
(51) Int. Cl.: B60N 2/75, B60N 2/22, B60N 2/10

(54) **FAHRZEUGSITZ MIT VERSTELLBARER SCHALTKONSOLE**
VEHICLE SEAT WITH ADJUSTABLE SWITCHING BRACKET
SIÈGE DE VÉHICULE POURVU DE CONSOLE DE CHANGEMENT DE VITESSES RÉGLABLE

(30) Priorität: 13.04.2018 DE 102018108795; 13.04.2018 DE 102018108792
(43) Veröffentlichungstag der Anmeldung: 16.10.2019
(73) Patentinhaber: GRAMMER AG, 92289 Ursensollen (DE)
(72) Erfinder: Haller, Thomas, 92289 Ursensollen (DE)
(74) Vertreter: Hannke, Christian

(56) Entgegenhaltungen:
- EP-A2- 2 374 657
- US-A1- 2009 085 392

## Beschreibung

Die Erfindung betrifft einen Fahrzeugsitz für ein Fahrzeug gemäß dem Oberbegriff des Patentanspruches 1.

Derartige Fahrzeugsitze umfassen generell ein Sitzteil mit einem Sitzteilrahmen und ein Rückenlehnenteil.

Außerdem umfassen derartige Fahrzeugsitze mindestens ein, bevorzugt zwei Schaltkonsolenelemente, wobei eines der Schaltkonsolenelemente an einer linken und eines an einer rechten Seite des Sitzteils angeordnet sind. Ein derartiges Schaltkonsolenelement umfasst mindestens ein Steuerelement zur Ansteuerung mindestens einer Funktion mindestens eines Aktorelements des Fahrzeugs. Beispielsweise ist das Steuerelement als Handhebel oder Steuerknüppel ("Joystick") ausgestaltet. Beispielsweise wird mittels des Steuerelements eine Bewegung einer Baggerschaufel eines als Bagger ausgestalteten Fahrzeugs oder der Gabel eines als Gabelstapler ausgestalteten Fahrzeugs angesteuert.

Damit die Bedürfnisse unterschiedlicher Fahrer mit unterschiedlichem Körperbau erfüllt werden können, ist oft das Sitzteil und/ oder das Rückenlehnenteil hinsichtlich eines Neigungsgrades verstellbar ausgebildet. Zusätzlich ist oft eine Verstellung zumindest des Sitzteils in Längsrichtung des Fahrzeugsitzes möglich.

Aus der EP 2 374 657 A2 und der US 2009/0 085 392 A1 sind Sitze bekannt, bei denen zumindest ein Teil des Schaltkonsolenelements in Sitzlängsrichtung verschiebbar angeordnet ist.

Aufgabe der vorliegenden Erfindung ist es, einen Fahrzeugsitz zur Verfügung zu stellen, bei welchem das Schaltkonsolenelement in allen denkbaren Positionen bzw. Neigungsgraden des Rückenlehnenteils und des Sitzteils sowie für alle potentiellen Fahrer gut erreichbar ist.

Die Aufgabe der Erfindung wird gelöst von einem Fahrzeugsitz für ein Fahrzeug mit einem Sitzteil, umfassend einen Sitzteilrahmen, mit einer Armlehne und mit einem Rückenlehnenteil, wobei das Sitzteil und/ oder das Rückenlehnenteil hinsichtlich eines Neigungsgrades verstellbar ausgebildet ist, und mit mindestens einem Schaltkonsolenelement, aufweisend mindestens ein Steuerelement zur Ansteuerung mindestens einer Funktion mindestens eines Aktorelements des Fahrzeugs, wobei das Schaltkonsolenelement am Sitzteilrahmen seitlich des Sitzteils montiert ist, wobei ein erster Abschnitt des Schaltkonsolenelements zumindest in Längsrichtung des Fahrzeugsitzes verschiebbar ausgebildet ist. Erfindungsgemäß bildet das Schaltkonsolenelement keinerlei mechanische Wechselwirkung mit der Armlehne aus, wobei eine Verschiebung des Schaltkonsolenelements unabhängig von einer Verschiebung der Armlehne durchführbar ist und eine Verschiebung der Armlehne unabhängig von einer Verschiebung des Schaltkonsolenelements durchführbar ist.

Das Schaltkonsolenelement folgt also durch die Verbindung mit dem Sitzteilrahmen bevorzugt einer Bewegung und/ oder einer Verschwenkung des Sitzteils. Gleichzeitig ist ein erster Abschnitt des Schaltkonsolenelements hinsichtlich seiner Relativposition in Längsrichtung des Fahrzeugsitzes einstellbar und somit stets gut erreichbar.

Es ist wie oben beschrieben vorgesehen, dass der Fahrzeugsitz weiterhin mindestens eine Armlehne umfasst. Ebenfalls vorgesehen ist es, dass das Steuerkonsolenelement unabhängig von der mindestens einen Armlehne ausgebildet ist. Unabhängig ausgebildet heißt, dass das Steuerkonsolenelement keinerlei mechanische Wechselwirkung mit der Armlehne ausbildet. Unabhängig ausgebildet heißt ferner beispielsweise, dass eine Bewegung (Verschiebung und/ oder Verschwenkung) des Steuerkonsolenelements unabhängig von einer Bewegung (Verschiebung und/ oder Verschwenkung) der Armlehne durchführbar ist; bevorzugt gilt dies auch oder nur umgekehrt.

Um bei der Montage des Schaltkonsolenelements am Fahrzeugsitz vorhandene Elemente optimal auszunutzen, ist es bevorzugt, dass das Schaltkonsolenelement einen unmittelbar und starr mit dem Sitzteilrahmen verbundenen zweiten Abschnitt aufweist, gegenüber welchem der erste Abschnitt zumindest in Längsrichtung des Fahrzeugsitzes mittels einer Verschiebebewegung verschiebbar ausgebildet ist.

Es ist also bevorzugt, dass das gesamte Schaltkonsolenelement durch die starre Verbindung seines zweiten Abschnitts mit dem Sitzteilrahmen stets der Verschwenkung des Sitzteils folgt.

Um die Verschiebebewegung zwischen dem ersten Abschnitt und dem zweiten Abschnitt des Schaltkonsolenelements möglichst sicher und reibungsarm zu gestalten, ist es bevorzugt, dass der zweite Abschnitt des Schaltkonsolenelements ein Führungsschienenelement und der erste Abschnitt des Schaltkonsolenelements ein zum Führungsschienenelement mittels der Verschiebebewegung relativbewegliches Schlittenelement umfasst. Es ist möglich, dass das Führungsschienenelement und das Schlittenelement zueinander gleit- und/ oder wälzgelagert sind.

Bevorzugt sind das Führungsschienenelement und das Schlittenelement hinsichtlich ihrer Längsausdehnung sich in Längs- und/ oder Höhenrichtung des Fahrzeugsitzes erstreckend angeordnet. Weiter bevorzugt sind das Führungsschienenelement und das Schlittenelement hinsichtlich ihrer Längsausdehnung jeweils parallel zur Längsrichtung des Fahrzeugsitzes angeordnet.

Um die starre Verbindung zwischen dem Sitzteilrahmen und dem zweiten Abschnitt des Schaltkonsolenelements auszubilden, hat es sich als vorteilhaft herausgestellt, wenn der zweite Abschnitt des Schaltkonsolenelements Abstandsbolzen umfasst, welche jeweils mit einem ersten Ende starr mit dem Sitzteilrahmen und mit einem zweiten Ende lösbar mit dem Führungsschienenelement verbunden sind.

Es können beispielsweise an diesem Sitzunterbau mindestens zwei, bevorzugt drei Abstandsbolzen verschweißt sein. Um eine plane Auflagefläche des Führungsschienenelements an allen drei Abstandsbolzen zu garantieren, können diese Abstandsbolzen vor dem Verschweißen auf einer Montageplatte befestigt sein. Im Anschluss daran kann das Führungsschienenelement auf die Abstandsbolzen gesteckt und beispielsweise mittels je einer Bundmutter befestigt werden.

Am Schlittenelement können beispielsweise je zwei Halter für Steuerhebelträger montiert werden, an welchen die Steuerhebelträger montiert werden.

Um die Verschiebebewegung des Schlittenelements gegenüber dem Führungsschienenelement begrenzen zu können, ist es vorteilhaft, wenn an einem ersten und einem zweiten Ende des Führungsschienenelements jeweils ein mechanisches Anschlagelement angeordnet ist, welches dafür vorgesehen ist, bei der Verschiebebewegung des Schlittenelements gegenüber dem Führungsschienenelement mit dem Schlittenelement eine mechanische Wechselwirkung auszubilden.

Bevorzugt ist das Anschlagelement lösbar mit dem ersten und dem zweiten Ende des Führungsschienenelements verbunden. Bevorzugt sind zur Anordnung des Anschlagelements, welches beispielsweise als Schraube ausgestaltet ist, am ersten und am zweiten Ende des Führungsschienenelements jeweils mindestens zwei Verbindungselemente, welche insbesondere in Form von Aufnahmebohrungen ausgestaltet sind, angeordnet. Denkbar wäre auch, dass Verbindungselemente über die gesamte Länge des Führungsschienenelements angeordnet sind, bevorzugt in regelmäßigen Abständen von beispielsweise 10 mm zueinander.

Gemäß einem besonders bevorzugten Ausführungsbeispiel ist es vorgesehen, dass der erste Abschnitt des Schaltkonsolenelements einen in Sitzbreitenrichtung innen liegenden Anteil, an welchem eine erste Welle gelagert ist, und einen um die erste Welle verschwenkbaren in Sitzbreitenrichtung außen liegenden Anteil aufweist. Insbesondere ist also der außen liegende Anteil des ersten Abschnitts des Schaltkonsolenelements hinsichtlich eines Neigungsgrades verstellbar, bevorzugt hinsichtlich eines Neigungsgrades um die Sitzbreitenrichtung. Dem Fachmann ist bewusst, dass mittels der beschriebenen Lagerung mit der Verschwenkung um die erste Welle nicht nur eine Änderung des Neigungsgrades des außen liegenden Anteils, sondern auch eine Änderung der Position des außen liegenden Anteils in Höhenrichtung des Fahrzeugsitzes einhergeht.

Der Neigungsgrad des zweiten Abschnitts des Schaltkonsolenelements sowie des innen liegenden Anteils des ersten Abschnitts ist also bevorzugt lediglich von einem Neigungsgrad des Sitzteils abhängig. Der Neigungsgrad des außen liegenden Anteils des ersten Abschnitts des Schaltkonsolenelements ist dagegen bevorzugt zum einen vom Neigungsgrad des Sitzteils und zum anderen von einem Verschwenkungsgrad des außen liegenden Anteils um den innen liegenden Anteil abhängig. Somit ist bevorzugt eine Grobjustierung des Neigungsgrades des außen liegenden Anteils über den Neigungsgrad des Sitzteils sowie eine Feinjustierung über den Verschwenkungsgrad des außen liegenden Anteils um den innen liegenden Anteil möglich.

Die Längsposition des zweiten Abschnitts des Schaltkonsolenelements ist ferner bevorzugt lediglich von einer Längsposition des Sitzteils abhängig. Die Längsposition des ersten Abschnitts des Schaltkonsolenelements ist dagegen bevorzugt zum einen von der Längsposition des Sitzteils und zum anderen von einem Grad der Verschiebung des ersten Abschnitts gegenüber dem zweiten Abschnitt des Schaltkonsolenelements abhängig.

Besonders bevorzugt ist eine Mittelachse der ersten Welle parallel zur Sitzbreitenrichtung angeordnet. Weiterhin bevorzugt ist die erste Welle an einem hinteren Ende des Schaltkonsolenelements angeordnet, so dass insbesondere von allen Kompartimenten des außen liegenden Anteils des ersten Abschnitts des Schaltkonsolenelements ein vorderes Kompartiment während der Verschwenkbewegung um die erste Welle eine größtmögliche Änderung des Neigungsgrades erfährt. Damit ist es möglich, bereits mit einer Verschwenkung um einen geringen Winkel eine große Neigungs- und Höhenverstellung des vorderen Kompartiments zu erzielen.

An dem außen liegenden Anteil und bevorzugt an dem vorderen Kompartiment ist vorteilhaft das Steuerelement angeordnet, so dass dieses ebenfalls die größtmögliche Änderung des Neigungsgrades erfährt und sich also besonders schnell auf die gewünschte Neigung und damit auch auf die gewünschte Höhe einstellen lässt. Ebenfalls lässt sich der Neigungsgrad über die oben erwähnte Grob- und Feinjustierung relativ genau einstellen.

Besonders bevorzugt ist am vorderen Ende des Schaltkonsolenelements eine zweite Welle als Teil der Lagerung des vorderen Endes des Schaltkonsolenelements angeordnet. Beispielsweise ist eine Mittelachse der zweiten Welle parallel zur Sitzbreitenrichtung angeordnet.

Besonders bevorzugt ist am vorderen Ende des Schaltkonsolenelements ein Halteelement angeordnet, welches eine Haltekraft bereitstellt, mittels welcher das Schaltkonsolenelement hinsichtlich einer Verschwenkung um die erste Welle in Position haltbar ist. Dieses Halteelement ist insbesondere als Gasdruckfederelement ausgestaltet und/ oder mit der zweiten Welle verbunden. Eine Verschwenkung des Schaltkonsolenelements um die erste Welle erfolgt also bevorzugt manuell und/ oder in Richtung oder entgegen der Haltekraft des Halteelements.

Es ist bevorzugt, dass die erste und/ oder die zweite Welle gegenüber dem in Sitzbreitenrichtung innen liegenden Anteil keinen Freiheitsgrad in radialer und/ oder axialer Richtung aufweisen. Beispielsweise ist der radiale Freiheitsgrad gesperrt, indem eine Klemmschraube senkrecht zur Mittelachse der ersten und/ oder zweiten Welle am innen liegenden Anteil angeordnet ist, deren Schaft mittels seiner Stirnfläche radial außen an der ersten und/ oder der zweiten Welle anliegt und somit die Drehung der jeweiligen Welle um ihre Mittelachse sperrt. Beispielsweise ist der axiale Freiheitsgrad durch die Verwendung zweier Außensicherungsringe, welche auf einem Außendurchmesser der jeweiligen Welle und zu beiden Seiten des in Sitzbreitenrichtung außen liegenden Anteil angeordnet sind, gesperrt.

Ebenfalls bevorzugt ist die Verschiebebewegung des Schlittenelements gegenüber dem Führungsschienenelement sperrbar; insbesondere ist also nach erfolgter Verschiebung in Längsrichtung die gewünschte Relativposition des Schlittenelements gegenüber dem Führungsschienenelement arretierbar. Dazu ist es vorteilhaft, wenn am Führungsschienenelement ein mechanisches Sicherungselement angeordnet ist, welches in Eingriff mit dem Schlittenelement bringbar ist und dazu ausgebildet ist, die Verschiebebewegung des Schlittenelements gegenüber dem Führungsschienenelement zu sperren.

Beispielsweise ist dieses Sicherungselement als Rastbolzenelement ausgestaltet. Dieses ist beispielsweise in Bezug auf seine Mittelachse senkrecht zum Führungsschienenelement in einer zu ihm komplementären Aussparung angeordnet. Das Rastbolzenelement weist bevorzugt ein äußeres Hülsenelement auf, welches gegenüber dem Führungsschienenelement zumindest keine translatorischen Freiheitsgrade aufweist, mit anderen Worten ist es also, bevorzugt in Richtung der Mittelachse des Rastbolzenelements, nicht verschieblich gegenüber dem Führungsschienenelement angeordnet. Innerhalb des äußeren Hülsenelements ist ein Rastbolzen in Richtung der Mittelachse des Rastbolzenelements verschieblich gelagert.

Während das äußere Hülsenelement bevorzugt keine mechanische Wechselwirkung mit dem Schlittenelement aufweist, ist bevorzugt mittels einer Verschiebung des Rastbolzens in Richtung der Mittelachse des Rastbolzenelements hin zum Schlittenelement eine mechanische Wechselwirkung zwischen dem Rastbolzen und dem Schlittenelement ausbildbar. Bevorzugt ist der Rastbolzen in eine von mindestens zwei Bohrungen am Schlittenelement einführbar. Besonders bevorzugt sind die mindestens zwei Bohrungen in Längsrichtung des Schlittenelements angeordnet. Wenn es mehr als zwei Bohrungen sind, sind zwei benachbarte Bohrungen bevorzugt jeweils identisch zueinander beabstandet.

Eine Verschiebung des Rastbolzens innerhalb des Hülsenelements ist bevorzugt ausbildbar, indem ein dem Schlittenelement abgewandtes Ende des Rastbolzens mit einem weiteren, auf Zug und Druck belastbaren Bowdenzugelement verbunden ist. Ferner ist bevorzugt ein mittels eines Benutzers des Fahrzeugsitzes bedienbarer Hebel am Fahrzeugsitz angeordnet, welcher über das weitere Bowdenzugelement mit dem Rastbolzen verbunden ist.

Auf Zug beanspruchbar oder belastbar heißt, dass das jeweilige Element dazu ausgebildet ist, Zugkräfte zu übertragen. Auf Druck beanspruchbar heißt, dass das jeweilige Element dazu ausgebildet ist, Druckkräfte zu übertragen.

Verschwenkt oder verschiebt der Benutzer den Hebel in eine erste Richtung, so ist eine Seele des weiteren Bowdenzugelements, welche insbesondere als ein Drahtseil ausgestaltet ist, auf Zug belastet, und der Rastbolzen gleitet aus einer Bohrung am Schlittenelement heraus. Anschließend kann die Verschiebung des Schlittenelements gegenüber dem Führungsschienenelement erfolgen.

Verschwenkt oder verschiebt der Benutzer den Hebel in eine zweite Richtung, so ist die Seele auf Druck belastet, und der Rastbolzen kann in eine andere Bohrung am Schlittenelement hineingleiten. Besonders bevorzugt ist am Hebel ein Verstellelement, beispielsweise in Form einer Stellschraube angeordnet, mittels welchem eine Vorspannung der Seele veränderbar ist.

Zusätzlich oder alternativ kann der Rastbolzen gegenüber der äußeren Hülse federgelagert sein, wobei die Kraft einer Feder der Federlagerung dazu geeignet ist, den Rastbolzen in Richtung des Schlittenelements zu bewegen.

Eine äußere Hülle des weiteren Bowdenzugelements (auch Zughülle oder Bogen genannt), innerhalb welcher die Seele des weiteren Bowdenzugelements verschieblich gelagert ist, ist vorteilhaft am Sitzunterbau befestigt, beispielsweise mittels eines Halteblechs und einer Klemmschraube, so dass die Position der äußeren Hülle gegenüber dem Sitzunterbau fest ist.

Gemäß einer bevorzugten Ausführungsvariante ist es ferner vorgesehen, dass eines der Schaltkonsolenelemente eine Verschiebung wie oben beschrieben erfährt, indem der Benutzer die Arretierung löst und das Schaltkonsolenelement manuell verschiebt. Es kann möglich sein, dass das andere der Schaltkonsolenelemente ebenfalls eine eigene Verschiebung wie oben beschrieben erfährt und dementsprechend auch mit einer eigenen Arretierungsvorrichtung versehen ist.

Zugunsten einer höheren Kosteneffizienz ist es jedoch bevorzugt, dass nur das eine der Schaltkonsolenelemente mit einer eigenen Arretierungsvorrichtung versehen ist. Ferner ist es bevorzugt vorgesehen, dass das andere der Schaltkonsolenelemente mittels eines Übertragungssystems mit dem einen der Schaltkonsolenelemente gekoppelt ist. Bevorzugt ist das Übertragungssystem geeignet, die oben beschriebene Verschiebebewegung und/ oder die Arretierung von dem einen Schaltkonsolenelement auf das andere zu übertragen. Außerdem ist es bevorzugt, wenn das Übertragungssystem frei von elektronischen Komponenten ist.

Im Sinne der vorliegenden Erfindung wird unter dem Begriff "frei von elektronischen Komponenten" verstanden, dass das jeweilige Element, in diesem Falle das Übertragungssystem, ohne jegliche Komponente auskommt, die ein Fachmann als Elektronikkomponente ansehen würde; insbesondere sind solche Elektronikkomponenten beispielsweise als Sensoren, Kontakte, Steuerungen, Schalter, Relais, Dioden, Lichtschranken etc. ausgebildet. Somit ist das Übertragungssystem beispielsweise ausschließlich mechanisch oder mechanisch und pneumatisch oder mechanisch und hydraulisch ausgestaltet.

Vorteile und Zweckmäßigkeiten sind der nachfolgenden Beschreibung in Verbindung mit der Zeichnung zu entnehmen.

Es zeigen:
- Fig. 1: eine perspektivische Ansicht eines erfindungsgemäßen Fahrzeugsitzes;
- Fig. 2a-2c: verschiedene Ansichten eines Sitzteils des Fahrzeugsitzes gemäß Fig. 1 mit Teilen zweier Schaltkonsolenelemente;
- Fig. 3a-3f: verschiedene Ansichten des Sitzunterbaus des Sitzteils gemäß den Figuren 2a-2c mit dem Führungsschienenelement und dem Schlittenelement des Schaltkonsolenelements;
- Fig. 4: eine perspektivische Ansicht des Schaltkonsolenelements mit der ersten Welle;
- Fig. 5a, 5b: verschiedene Ansichten der Arretiervorrichtung zwischen dem Führungsschienenelement und dem Schlittenelement des Schaltkonsolenelements.

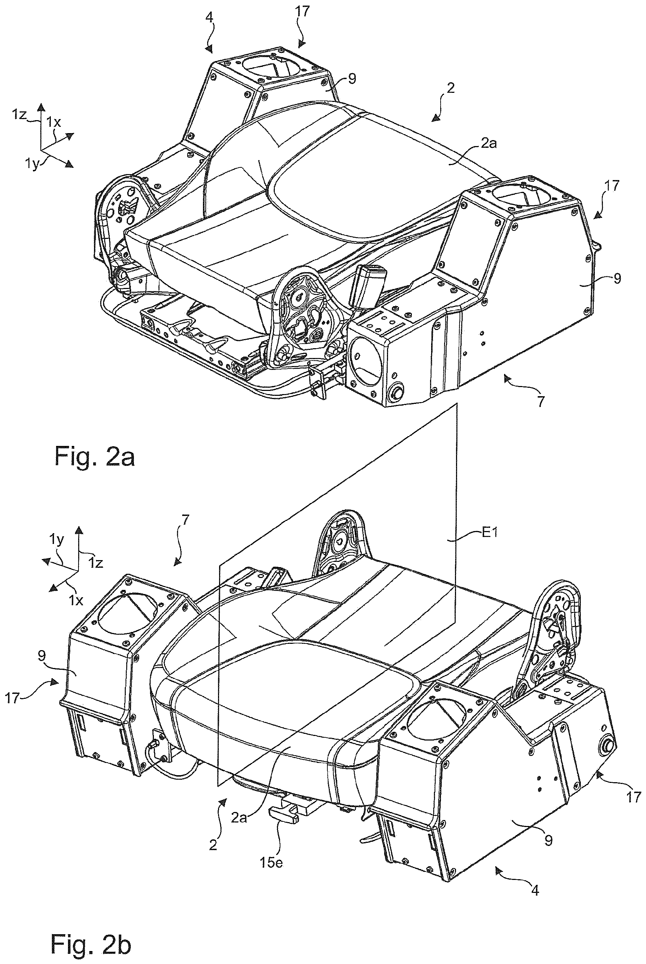

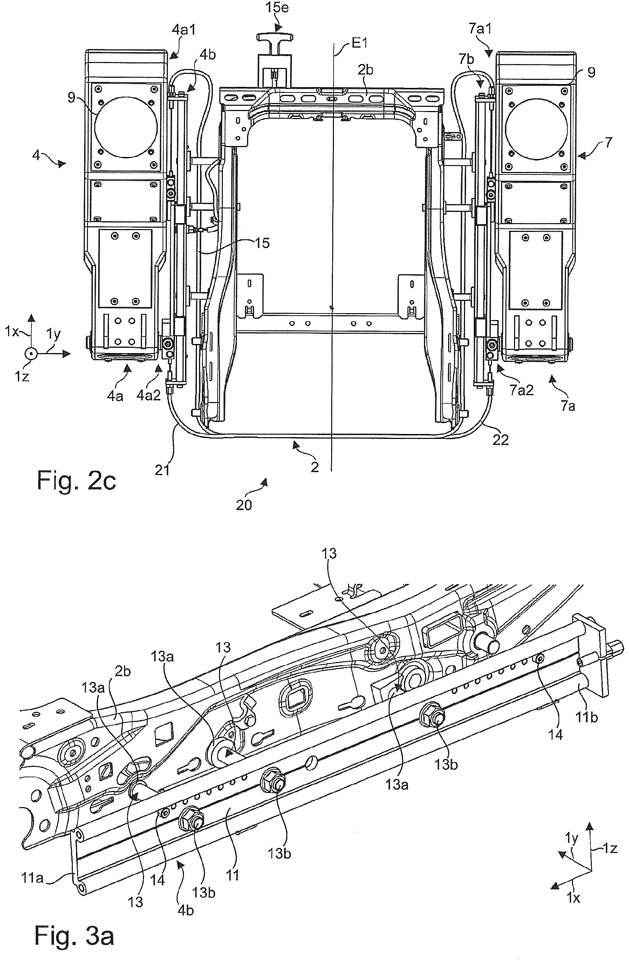

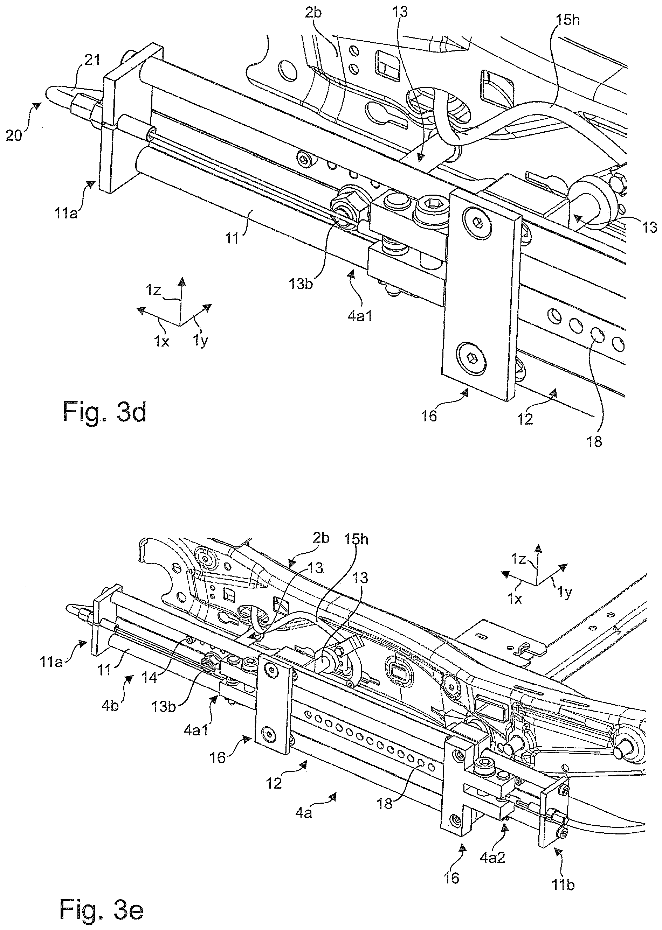

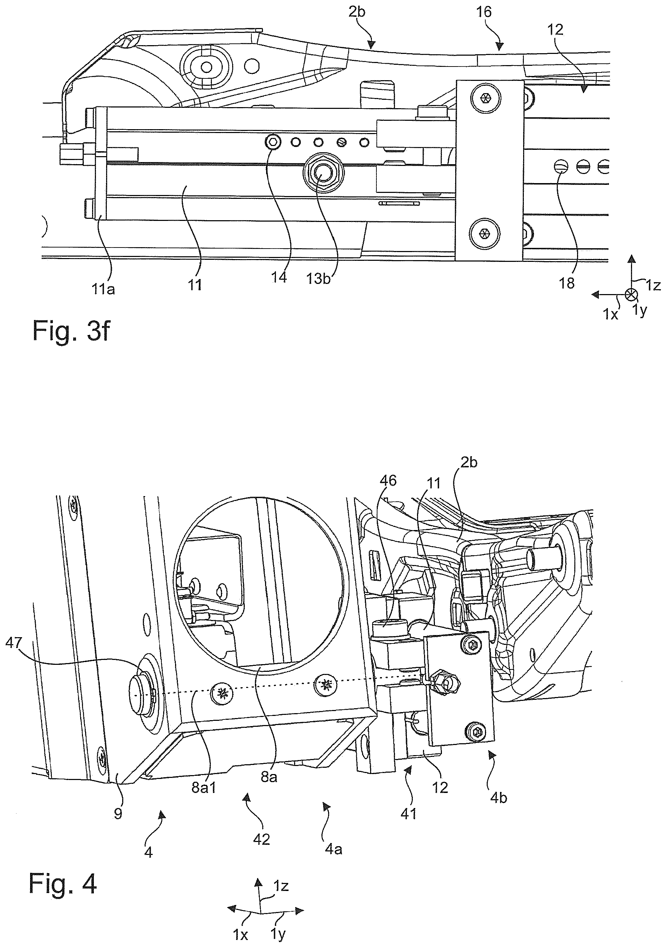

Es sei darauf hingewiesen, dass in den Figuren zum Teil Komponenten nicht dargestellt sind, um die Übersichtlichkeit zu gewähren. Beispielsweise zeigen die Figuren 2a-c kein Steuerhebelelement 5 und die Figuren 3a-f nur Teile des Schaltkonsolenelements 4.

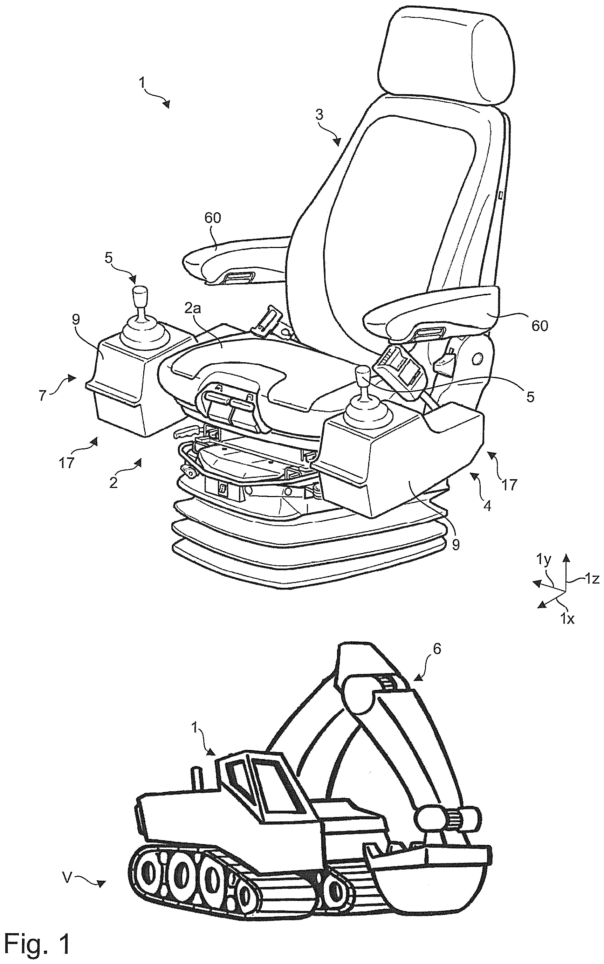

Die Figur 1 zeigt demnach einen Fahrzeugsitz 1 für ein in diesem Fall als Bagger dargestelltes Fahrzeug V mit einem Sitzteil 2 und mit einem Rückenlehnenteil 3, wobei das Sitzteil (2) und/ oder das Rückenlehnenteil 3 hinsichtlich eines Neigungsgrades verstellbar ausgebildet ist. Ferner sind in diesem Beispiel zwei Schaltkonsolenelemente 4, 7, aufweisend jeweils ein Steuerelement 5 in Form eines Joysticks zur Ansteuerung mindestens einer Funktion mindestens eines Aktorelements 6 (hier in Form eines Motors zur Bewegung eines Baggerschaufelarms des Fahrzeugs V) am Fahrzeugsitz 1 angeordnet.

Gezeigt ist ferner in allen Figuren 1-5b ein Koordinatensystem mit der Längsrichtung 1x mit nach vorne weisender Pfeilspitze, der Breitenrichtung 1y mit nach rechts weisender Pfeilspitze sowie der Höhenrichtung 1z des Fahrzeugsitzes 1 mit nach oben weisender Pfeilspitze, jeweils aus Sicht eines nicht dargestellten Benutzers des Fahrzeugsitzes 1.

Das Sitzteil 2 umfasst vorliegend ein Sitzpolsterteil 2a und einen Sitzteilrahmen 2b. Das eine Schaltkonsolenelement 4 ist am Sitzteilrahmen 2b (siehe Fig. 3a) und seitlich, in diesem Fall aus Sicht des nicht dargestellten Benutzers des Fahrzeugsitzes 1 links des Sitzteils 2 montiert. Das andere Schaltkonsolenelement 7 ist an einem Sitzteilrahmen 2b (siehe Fig. 3a) des Sitzteils 2 und seitlich, in diesem Fall aus Sicht des nicht dargestellten Benutzers des Fahrzeugsitzes 1 rechts des Sitzteils 2 montiert. Beide Schaltkonsolenelemente weisen eine in Bezug auf eine Verschiebung in Längsrichtung 1x identische Relativposition gegenüber dem Fahrzeugsitz 1 auf und sind insbesondere gemäß der Figuren 1, 2a, 2b und 2c in einer Grundstellung gezeigt.

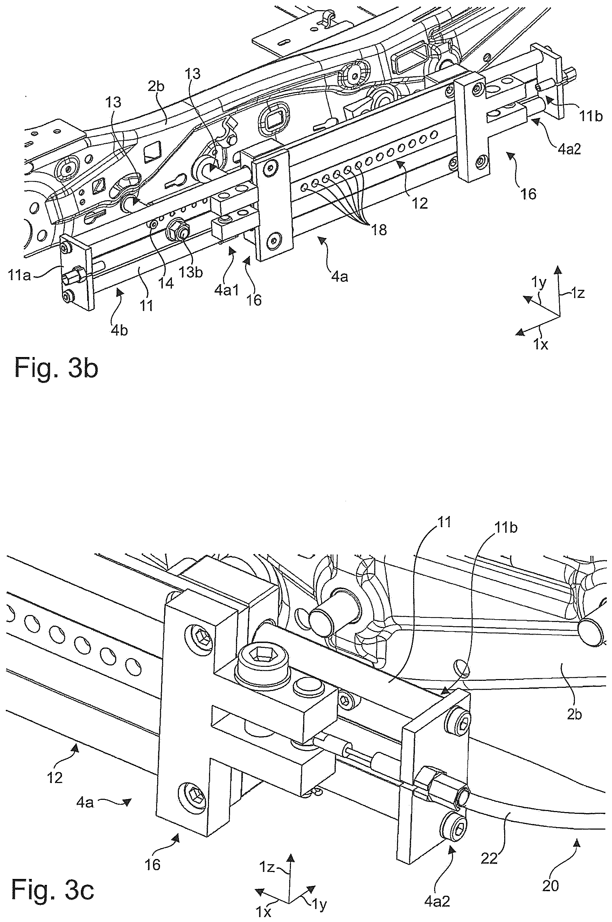

Die vorliegende Fig. 2c zeigt, dass nur das Schaltkonsolenelement 4 mit einer eigenen Arretierungsvorrichtung (siehe Beschreibung unten bezüglich des Rastbolzenelements 15) versehen ist. Ferner ist das Schaltkonsolenelement 7 mittels eines Übertragungssystems 20 (siehe insbesondere Fig. 3c) mit dem Schaltkonsolenelement 4 gekoppelt. Vorliegend ist das Übertragungssystem 20 geeignet, die oben beschriebene Verschiebebewegung und die Arretierung von dem einen Schaltkonsolenelement 4 auf das andere 7 zu übertragen.

Außerdem ist vorliegend das Übertragungssystem 20 frei von elektronischen Komponenten und in diesem Beispiel ausschließlich mechanisch in Form eines weiteren Bowdenzugsystems ausgestaltet. Das Bowdenzugsystem 20 umfasst in diesem Beispiel einen ersten Bowdenzug 21, welcher jeweils unmittelbar mit dem vorderen Ende 4a1 des ersten Abschnitts 4a des ersten Schaltkonsolenelements 4 und mit dem hinteren Ende 7a2 des ersten Abschnitts 7a des zweiten Schaltkonsolenelements 7 verbunden ist, und einen zweiten Bowdenzug 22, welcher jeweils unmittelbar mit dem vorderen Ende 7a1 des ersten Abschnitts 7a des zweiten Schaltkonsolenelements 7 und mit dem hinteren Ende 4a2 des ersten Abschnitts 4a des ersten Schaltkonsolenelements 4 verbunden ist (siehe hierzu insbesondere Fig. 2c).

Die nun folgende Beschreibung bezieht sich, wenn nicht anders angegeben, stets auf das links des Sitzteils 2 montierte Schaltkonsolenelement 4. Dem Fachmann ist selbstverständlich klar, dass die folgenden Merkmale und Beschreibungen analog auch für das rechts des Sitzteils 2 montierte Schaltkonsolenelement 7 gelten können.

Das Schaltkonsolenelement 4 umfasst einen Steuerhebelträger mit einem Gehäuse 9, welches insbesondere zur Lagerung des Steuerhebelelements 5 sowie zum Schutz von Signalleitungen zum Steuerhebelelement hin dient.

Die Fig. 3b zeigt beispielsweise einen ersten Abschnitt 4a des Schaltkonsolenelements 4, welcher zumindest in Längsrichtung 1x des Fahrzeugsitzes 1 verschiebbar ausgebildet ist.

Gezeigt ist, dass der Fahrzeugsitz 1 in diesem Beispiel zwei Armlehnen 60 umfasst. In diesem Fall ist das Steuerkonsolenelement 4 unabhängig von beiden Armlehnen 60 ausgebildet. Das Steuerkonsolenelement 4 bildet vorliegend keinerlei mechanische Wechselwirkung mit der Armlehne 60 aus. Ferner ist eine Bewegung (Verschiebung und/ oder Verschwenkung) des Steuerkonsolenelements 4 unabhängig von einer Bewegung (Verschiebung und/ oder Verschwenkung) der Armlehne 60 durchführbar; es gilt dies vorliegend auch umgekehrt.

Die Fig. 3a zeigt nur einen zweiten Abschnitt 4b des Schaltkonsolenelements 4, nicht aber den ersten Abschnitt 4a. Gezeigt ist, dass das Schaltkonsolenelement 4 den unmittelbar und starr mit dem Sitzteilrahmen 2b verbundenen zweiten Abschnitt 4b aufweist. Diesem gegenüber ist der erste Abschnitt 4a in Längsrichtung 1x des Fahrzeugsitzes 1 mittels einer Verschiebebewegung verschiebbar ausgebildet.

Vorliegend ist also gewährleistet, dass zumindest der zweite Abschnitt 4b durch die starre Verbindung mit dem Sitzteilrahmen 2b stets der Verschwenkung des Sitzteils 2 folgt. Wie weiter unten noch erläutert wird, ist es jedoch bevorzugt, dass das Schaltkonsolenelement 4 zumindest abschnittsweise, insbesondere nämlich ein Anteil 42 des ersten Abschnitts 4a des Schaltkonsolenelements 4, hinsichtlich eines Neigungsgrades nochmals unabhängig vom Sitzteil 2 verstellbar ist.

Insbesondere die Fig. 3b zeigt, dass der zweite Abschnitt 4b des Schaltkonsolenelements 4 ein Führungsschienenelement 11 und der erste Abschnitt 4a des Schaltkonsolenelements 4 ein zum Führungsschienenelement 11 mittels der Verschiebebewegung relativbewegliches Schlittenelement 12 umfasst. In diesem Beispiel sind das Führungsschienenelement 11 und das Schlittenelement 12 zueinander gleitgelagert.

Vorliegend sind das Führungsschienenelement 11 und das Schlittenelement 12 hinsichtlich ihrer Längsausdehnung sich in Längs- 1x und Höhenrichtung 1z des Fahrzeugsitzes 1 erstreckend angeordnet. Ferner sind das Führungsschienenelement 11 und das Schlittenelement 12 hinsichtlich ihrer Längsausdehnung jeweils parallel zur Längsrichtung 1x des Fahrzeugsitzes 1 angeordnet.

Um die starre Verbindung zwischen dem Sitzteilrahmen 2b und dem zweiten Abschnitt 4b des Schaltkonsolenelements 4 auszubilden, umfasst der zweite Abschnitt 4b des Schaltkonsolenelements 4 vorliegend drei Abstandsbolzen 13, welche jeweils mit einem ersten Ende 13a starr mit dem Sitzteilrahmen 2b und mit einem zweiten Ende 13b lösbar mit dem Führungsschienenelement 11 verbunden sind (siehe insbesondere Fig. 3a). Vorliegend ist das Führungsschienenelement auf die Abstandsbolzen gesteckt und mittels je einer Bundmutter befestigt.

Am Schlittenelement 12 sind vorliegend je zwei Halter 16 für den Steuerhebelträger 17 bzw. für das Gehäuse 9 montiert.

Ferner zeigt die Fig. 3a, dass an einem ersten und in Längsrichtung 1x vorderen Ende 11a und einem zweiten und in Längsrichtung 1x hinteren Ende 11b des Führungsschienenelements 11 jeweils ein mechanisches Anschlagelement 14 angeordnet ist, welches dafür vorgesehen ist, bei der Verschiebebewegung des Schlittenelements 12 gegenüber dem Führungsschienenelement 11 mit dem Schlittenelement 12 eine mechanische Wechselwirkung auszubilden.

Vorliegend ist das Anschlagelement 14 lösbar mit dem ersten 11a und dem zweiten Ende 11b des Führungsschienenelements 11 verbunden. Vorliegend sind zur Anordnung des Anschlagelements, welches vorliegend als Schraube ausgestaltet ist, am ersten 11a und am zweiten Ende 11b des Führungsschienenelements 11 jeweils mehrere Verbindungselemente in Form von Aufnahmebohrungen angeordnet.

Gemäß der Fig. 4 ist gezeigt, dass der erste Abschnitt 4a des Schaltkonsolenelements 4 einen in Sitzbreitenrichtung 1y innen liegenden Anteil 41, an welchem eine erste Welle 8a gelagert ist, und den um die erste Welle 8a verschwenkbaren in Sitzbreitenrichtung 1y außen liegenden Anteil 42 aufweist. Die Mittelachse 8a1 der ersten Welle 8a ist vorliegend parallel zur Sitzbreitenrichtung 1y angeordnet. Weiterhin ist die erste Welle 8a an einem hinteren Ende des Schaltkonsolenelements 4 angeordnet und gegenüber dem innen liegenden Anteil 41 mittels einer Klemmschraube 46 radial sowie gegenüber dem Gehäuse 9 mittels zweier Außensicherungsringen 47 (nur einer gezeigt) axial gesichert.

Vorliegend ist am vorderen Ende des Schaltkonsolenelements 4 eine zweite Welle (nicht gezeigt) als Teil der Lagerung des vorderen Endes des Schaltkonsolenelements 4 angeordnet, deren Lagerung gegenüber dem innen liegenden Anteil 41 und/ oder dem Gehäuse 9 beispielsweise identisch zur Lagerung der ersten Welle 8a ausgestaltet ist. Ferner ist am vorderen Ende des Schaltkonsolenelements 4 ein Halteelement (nicht gezeigt) angeordnet, welches eine Haltekraft bereitstellt, mittels welcher das Schaltkonsolenelement 4 hinsichtlich einer Verschwenkung um die erste Welle 8a in Position haltbar ist.

Der Neigungsgrad des zweiten Abschnitts 4b sowie des Anteils 41 des ersten Abschnitts 4a ist also lediglich von einem Neigungsgrad des Sitzteils 2 abhängig. Der Neigungsgrad des Anteils 42 des ersten Abschnitts 4a ist ferner zum einen vom Neigungsgrad des Sitzteils 2 und zum anderen von einem Verschwenkungsgrad des Anteils 42 um den Anteil 41 abhängig.

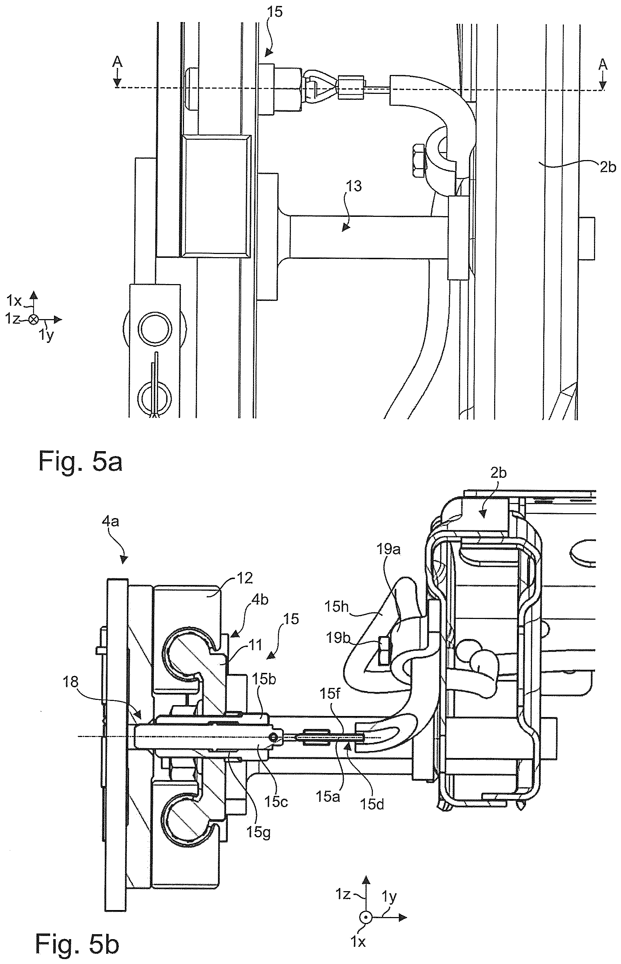

Aus den Figuren 5a und 5b geht hervor, dass vorliegend die Verschiebebewegung des Schlittenelements 12 gegenüber dem Führungsschienenelement 11 sperrbar ist. Die Fig. 5b zeigt dabei eine Querschnittsdarstellung entlang der Linie A-A aus Fig. 5a. Gezeigt ist, dass am Führungsschienenelement 11 ein mechanisches Sicherungselement 15 angeordnet ist, welches in Eingriff mit dem Schlittenelement 12 bringbar ist und dazu ausgebildet ist, die Verschiebebewegung des Schlittenelements 12 gegenüber dem Führungsschienenelement 11 zu sperren.

Vorliegend ist dieses Sicherungselement 15' als Rastbolzenelement 15 ausgestaltet. Dieses ist in Bezug auf seine Mittelachse 15a senkrecht zum Führungsschienenelement 11 in einer zu ihm komplementären Aussparung angeordnet. Das Rastbolzenelement 15 weist bevorzugt ein äußeres Hülsenelement 15b auf, welches gegenüber dem Führungsschienenelement 11 zumindest keine translatorischen Freiheitsgrade aufweist, mit anderen Worten ist es also, vorliegend in Richtung der Mittelachse 15a des Rastbolzenelements 15, nicht verschieblich gegenüber dem Führungsschienenelement 11b angeordnet. Innerhalb des äußeren Hülsenelements 15b ist ein Rastbolzen 15c in Richtung der Mittelachse 15a des Rastbolzenelements 15 verschieblich gelagert.

Während das äußere Hülsenelement 15b keine mechanische Wechselwirkung mit dem Schlittenelement 12 aufweist, ist mittels einer Verschiebung des Rastbolzens 15c in Richtung der Mittelachse 15a des Rastbolzenelements 15 hin zum Schlittenelement 12 eine mechanische Wechselwirkung zwischen dem Rastbolzen 15c und dem Schlittenelement 12 ausbildbar. Vorliegend ist der Rastbolzen 15c in eine von einer Vielzahl an Bohrungen 18 (siehe Fig. 3b, gemäß der einige der Bohrungen referenziert sind) am Schlittenelement 12 einführbar. Vorliegend sind die Bohrungen 18 in Längsrichtung des Schlittenelements 12 angeordnet, wobei zwei benachbarte Bohrungen jeweils identisch zueinander beabstandet sind.

Eine Verschiebung des Rastbolzens 15c innerhalb des Hülsenelements 15b ist vorliegend ausbildbar, indem ein dem Schlittenelement 12 abgewandtes Ende des Rastbolzens 15c mit einem Bowdenzugelement 15d verbunden ist. Ferner ist ein mittels eines Benutzers des Fahrzeugsitzes 1 bedienbarer Hebel 15e (siehe insbesondere Fig. 2b und 2c) am Fahrzeugsitz 1 angeordnet, welcher über das Bowdenzugelement 15d mit dem Rastbolzen 15c verbunden ist.

Verschwenkt oder verschiebt der Benutzer den Hebel 15e in eine erste Richtung (vorliegend in Sitzlängsrichtung 1x nach vorne), so ist eine Seele 15f des Bowdenzugelements 15d, welche insbesondere als ein Drahtseil ausgestaltet ist, auf Zug belastet, und der Rastbolzen 15c gleitet aus einer Bohrung 18 am Schlittenelement 12 heraus. Anschließend kann die Verschiebung des Schlittenelements 12 gegenüber dem Führungsschienenelement 11 erfolgen.

Verschwenkt oder verschiebt der Benutzer den Hebel 15e in eine zweite Richtung (vorliegend in Sitzlängsrichtung 1x nach hinten), so ist die Seele 15f auf Druck belastet, und der Rastbolzen 15c kann in eine andere Bohrung 18 am Schlittenelement 12 hineingleiten. Vorliegend ist am Hebel 15e ein nicht gezeigtes Verstellelement in Form einer Stellschraube angeordnet, mittels welchem eine Vorspannung der Seele 15f veränderbar ist.

Zusätzlich wäre es denkbar, dass der Rastbolzen 15c gegenüber der äußeren Hülse 15b federgelagert ist, wobei eine Kraft einer beispielsweise in dem Hohlraum 15g zwischen der Außenfläche des Rastbolzens 15c und der Innenfläche der äußeren Hülse 15b gelagerten Feder (nicht gezeigt) der Federlagerung auf den Rastbolzen 15c in Richtung des Schlittenelements 12 wirkt.

Eine äußere Hülle 15h des Bowdenzugelements 15d, innerhalb welcher die Seele 15f des Bowdenzugelements 15d verschieblich gelagert ist, ist vorteilhaft am Sitzunterbau 2b befestigt, beispielsweise mittels eines Halteblechs 19a und einer Klemmschraube 19b, so dass die Position der äußeren Hülle 15h gegenüber dem Sitzunterbau 2b fest ist.

### Bezugszeichenliste

- 1: Fahrzeugsitz
- 1x: Längsrichtung
- 1y: Breitenrichtung
- 1z: Höhenrichtung
- 2: Sitzteil
- 2a: Sitzfläche
- 2b: Sitzteilrahmen
- 3: Rückenlehnenteil
- 4, 7: Schaltkonsolenelement
- 4a, 7a: erster Abschnitt
- 4a1, 7a1: vorderes Ende
- 4a2, 7a2: hinteres Ende
- 4b: zweiter Abschnitt
- 5: Steuerelement
- 6: Aktorelement
- 8a: Welle
- 8a1: Mittelachse
- 9: Gehäuseelement
- 10: Übertragungssystem
- 11: Führungsschienenelement
- 11a, 11b: Ende
- 12: Schlittenelement
- 13: Abstandsbolzen
- 13a, 13b: Ende
- 14: Anschlagelement
- 15': Sicherungselement
- 15: Rastbolzenelement
- 15a: Mittelachse
- 15b: Hülsenelement
- 15c: Rastbolzen
- 15d: Bowdenzugelement
- 15e: Hebel
- 15f: Seele
- 15g: Hohlraum
- 15h: äußere Hülle
- 16: Halter
- 17: Steuerhebelträger
- 18: Bohrung
- 19a: Halteblech
- 19b: Klemmschraube
- 20: Bowdenzugsystem
- 21,22,23: Bowdenzug
- 30: Zylindersystem
- 31, 32: Zylinder
- 41, 42: Anteil
- 50: Leitelemente
- 60: Armlehne
- L, R: Seite
- V: Fahrzeug

## Patentansprüche

1. Fahrzeugsitz (1) für ein Fahrzeug (V) mit einem Sitzteil (2), umfassend einen Sitzteilrahmen (2b), mit einer Armlehne (60) und mit einem Rückenlehnenteil (3), wobei das Sitzteil (2) und/ oder das Rückenlehnenteil (3) hinsichtlich eines Neigungsgrades verstellbar ausgebildet ist, und mit mindestens einem Schaltkonsolenelement (4), aufweisend mindestens ein Steuerelement (5) zur Ansteuerung mindestens einer Funktion mindestens eines Aktorelements (6) des Fahrzeugs (V),
wobei das Schaltkonsolenelement (4) am Sitzteilrahmen (2b) seitlich des Sitzteils (2) montiert ist, wobei ein erster Abschnitt (4a) des Schaltkonsolenelements (4) zumindest in Längsrichtung (1x) des Fahrzeugsitzes (1) verschiebbar ausgebildet ist,
**dadurch gekennzeichnet, dass**
das Schaltkonsolenelement (4) keinerlei mechanische Wechselwirkung mit der Armlehne (60) ausbildet, wobei eine Verschiebung des Schaltkonsolenelements (4) unabhängig von einer Verschiebung der Armlehne (60) durchführbar ist und eine Verschiebung der Armlehne (60) unabhängig von einer Verschiebung des Schaltkonsolenelements (4) durchführbar ist.

2. Fahrzeugsitz (1) nach Anspruch 1,
**dadurch gekennzeichnet, dass**
das Schaltkonsolenelement (4) einen unmittelbar und starr mit dem Sitzteilrahmen (2b) verbundenen zweiten Abschnitt (4b) aufweist, gegenüber welchem der erste Abschnitt (4a) zumindest in Längsrichtung (1x) des Fahrzeugsitzes (1) mittels einer Verschiebebewegung verschiebbar ausgebildet ist.

3. Fahrzeugsitz (1) nach Anspruch 2,
**dadurch gekennzeichnet, dass**
der zweite Abschnitt (4b) des Schaltkonsolenelements (4) ein Führungsschienenelement (11) und der erste Abschnitt (4a) des Schaltkonsolenelements (4) ein zum Führungsschienenelement (11) mittels der Verschiebebewegung relativbewegliches Schlittenelement (12) umfasst.

4. Fahrzeugsitz (1) nach Anspruch 3,
**dadurch gekennzeichnet, dass**
der zweite Abschnitt (4b) des Schaltkonsolenelements (4) Abstandsbolzen (13) umfasst, welche jeweils mit einem ersten Ende (13a) starr mit dem Sitzteilrahmen (2b) und mit einem zweiten Ende (13b) lösbar mit dem Führungsschienenelement (11) verbunden sind.

5. Fahrzeugsitz (1) nach einem der Ansprüche 3 oder 4,
**dadurch gekennzeichnet, dass**
an einem ersten (11a) und einem zweiten Ende (11b) des Führungsschienenelements (11) jeweils ein mechanisches Anschlagelement (14) angeordnet ist, welches dafür vorgesehen ist, bei der Verschiebebewegung des Schlittenelements (12) gegenüber dem Führungsschienenelement (11) mit dem Schlittenelement (12) eine mechanische Wechselwirkung auszubilden.

6. Fahrzeugsitz (1) nach einem der vorhergehenden Ansprüche,
**dadurch gekennzeichnet, dass**
der erste Abschnitt (4a) des Schaltkonsolenelements (4) einen in Sitzbreitenrichtung (1y) innen liegenden Anteil (41), an welchem eine erste Welle (8a) gelagert ist, und einen um die erste Welle (8a) verschwenkbaren in Sitzbreitenrichtung (1y) außen liegenden Anteil (42) aufweist.

7. Fahrzeugsitz (1) nach einem der Ansprüche 3-6,
**dadurch gekennzeichnet, dass**
am Führungsschienenelement (11) ein mechanisches Sicherungselement (15) angeordnet ist, welches in Eingriff mit dem Schlittenelement (12) bringbar ist und dazu ausgebildet ist, die Verschiebebewegung des Schlittenelements (12) gegenüber dem Führungsschienenelement (11) zu sperren.

## Claims

1. Vehicle seat (1) for a vehicle (V), comprising a seat part (2) that has a seat part frame (2b), comprising an armrest and comprising a backrest part (3), the seat part (2) and/or the backrest part (3) being designed so as to be adjustable with respect to a degree of inclination, and comprising at least one switching console element (4) comprising at least one control element (5) for actuating at least one function of at least one actuator element (6) of the vehicle (V),
wherein the switching console element (4) is mounted on the seat part frame (2b) to the side of the seat part (2), a first portion (4a) of the switching console element (4) being designed so as to be displaceable at least in the longitudinal direction (1x) of the vehicle seat (1)
**characterised in that**
the switching console element (4) does not form any mechanical interaction with the armrest (60), wherein a movement of the switching console element (4) can be performed independently from the movement of the armrest and a movement of the armrest (60) can be performed independently from the movement of the switching console element (4).

2. Vehicle seat (1) according to claim 1,
**characterised in that**
the switching console element (4) comprises a second portion (4b) which is directly and rigidly connected to the seat part frame (2b) and relative to which the first portion (4a) is designed to be displaceable, at least in the longitudinal direction (1x) of the vehicle seat (1), by means of a translational movement.

3. Vehicle seat (1) according to claim 2,
**characterised in that**
the second portion (4b) of the switching console element (4) comprises a guide rail element (11), and the first portion (4a) of the switching console element (4) comprises a carriage element (12) that can be moved relative to the guide rail element (11) by means of the translational movement.

4. Vehicle seat (1) according to claim 3,
**characterised in that**
the second portion (4b) of the switching console element (4) comprises spacer bolts (13) which are each rigidly connected, at a first end (13a), to the seat part frame (2b), and releasably connected, at a second end (13b), to the guide rail element (11).

5. Vehicle seat (1) according to either claim 3 or claim 4,
**characterised in that**
a mechanical stop element (14) is arranged at a first end (11a) and a second end (11b) of the guide rail element (11) in each case, which stop element is intended to create a mechanical interaction with the carriage element (12) during the translational movement of the carriage element (12) with respect to the guide rail element (11).

6. Vehicle seat (1) according to any of the preceding claims,
**characterised in that**
the first portion (4a) of the switching console element (4) comprises a part (41) which is on the inside in the seat width direction (1y) and on which a first shaft (8a) is mounted, and a part (42) that is on the outside in the seat width direction (1y) and can be pivoted about the first shaft (8a).

7. Vehicle seat (1) according to any of claims 3-6,
**characterised in that**
a mechanical securing element (15) is arranged on the guide rail element (11), which securing element can be brought into engagement with the carriage element (12) and is designed to block the translational movement of the carriage element (12) relative to the guide rail element (11).

## Revendications

1. Siège de véhicule (1) pour un véhicule (V) avec une partie assise (2), comportant un cadre de partie assise (2b), avec un accoudoir (60) et avec une partie dossier (3), la partie assise (2) et/ou la partie dossier (3) étant conçues réglables en ce qui concerne un degré d'inclinaison, et avec au moins un élément console de commutation (4), présentant au moins un élément de commande (5) pour la commande d'au moins une fonction d'au moins un élément actionneur (6) du véhicule (V),
l'élément console de commutation (4) étant monté sur le cadre de partie assise (2b) latéralement à la partie assise (2), une première section (4a) de l'élément console de commutation (4) étant réalisée déplaçable au moins dans la direction longitudinale (1x) du siège de véhicule (1),
**caractérisé par le fait que**
l'élément console de commutation (4) ne forme aucune interaction mécanique avec l'accoudoir (60), un déplacement de l'élément console de commution (4) étant réalisable indépendamment d'un déplacement de l'accoudoir (60) et un déplacement de l'accoudoir (60) étant réalisable indépendamment d'un déplacement de l'élément console de commutation (4).

2. Siège de véhicule (1) selon la revendication 1,
**caractérisé par le fait que**
l'élément console de commutation (4) présente une seconde section (4b) reliée directement et rigidement avec le cadre de partie assise (2b), par rapport à laquelle la première section (4a) est réalisée déplaçable au moins dans la direction longitudinale (1x) du siège de véhicule (1) au moyen d'un mouvement de translation.

3. Siège de véhicule (1) selon la revendication 2,
**caractérisé par le fait que**
la seconde section (4b) de l'élément console de commutation (4) comporte un élément rail de guidage (11) et la première section (4a) de l'élément console de commutation (4) comporte un élément chariot (12) déplaçable par rapport à l'élément rail de guidage (11) au moyen du mouvement de translation.

4. Siège de véhicule (1) selon la revendication 3,
**caractérisé par le fait que**
la seconde section (4b) de l'élément console de commutation (4) comporte des boulons d'écartement (13), lesquels sont respectivement reliés de manière rigide par une première extrémité (13a) au cadre de partie assise (2b) et de manière amovible par une seconde extrémité (13b) à l'élément rail de guidage (11).

5. Siège de véhicule (1) selon l'une des revendications 3 ou 4,
**caractérisé par le fait qu'**
à une première (11a) et à une seconde extrémité (11b) de l'élément rail de guidage (11), est disposé respectivement un élément de butée mécanique (14), lequel est prévu pour former une interaction mécanique avec l'élément chariot (12) lors du mouvement de translation de l'élément chariot (12) par rapport à l'élément rail de guidage (11).

6. Siège de véhicule (1) selon l'une des revendications précédentes,
**caractérisé par le fait que**
la première section (4a) de l'élément console de commutation (4) présente une partie (41) située à l'intérieur dans le sens de la largeur d'assise (1y), partie sur laquelle est monté un premier arbre (8a), et une partie (42) située à l'extérieur dans le sens de la largeur d'assise (1y) et pouvant pivoter autour du premier arbre (8a).

7. Siège de véhicule (1) selon l'une des revendications 3 à 6,
**caractérisé par le fait que**
sur l'élément rail de guidage (11), est disposé un élément de sécurité mécanique (15), lequel est apte à être amené en prise avec l'élément chariot (12) et est conçu pour bloquer le mouvement de translation de l'élément chariot (12) par rapport à l'élément rail de guidage (11).
